# EUROPEAN PATENT APPLICATION

(11) **EP 4 407 000 A1**
(43) Date of publication of application: **31.07.2024**
(21) Application number: 23153092.4
(22) Date of filing: 24.01.2023

(54) **COMPOSITION FOR THE PROTECTION OF AN ARTICLE AGAINST CORROSION**

(71) Applicant: Seal for Life Global Dutch Holding B.V., 9503 JB Stadskanaal (NL)
(72) Inventor: BROESDER, Hindrik Harm, 9503 JB Stadskanaal (NL); SALEHPOUR, Somaieh, 9503 JB Stadskanaal (NL); CUDIC, Dinko, 9503 JB Stadskanaal (NL)
(74) Representative: Jones Day

(57) **Abstract**

The present invention is directed to a composition for the protection against corrosion of an article, wherein the corrosion protecting composition comprises: (i) an amorphous polymer composition comprising a polyisobutene blend having a glass transition temperature of -40 °C or less as determined by differential scanning calorimetry (DSC); (ii) one or more antioxidants; and (iii) one or more filler materials, wherein the amorphous polymer composition comprises two or more polyisobutenes independently selected from the group consisting of: (a) polyisobutenes having a number average molecular weight Mₙ of 500 - 5.000; (b) polyisobutenes having a viscosity average molecular weight Mᵥ of 5.000 - 20.000; (c) polyisobutenes having a viscosity average molecular weight Mᵥ of 20.000 - 35.000; (d) polyisobutenes having a viscosity average molecular weight Mᵥ of 35.000 - 45.000; (e) polyisobutenes having a viscosity average molecular weight Mᵥ of 45.000 - 55.000; (f) polyisobutenes having a viscosity average molecular weight Mᵥ of 55.000 - 65.000; (g) polyisobutenes having a viscosity average molecular weight Mᵥ of 65.000 - 75.000; (h) polyisobutenes having a viscosity average molecular weight Mᵥ of 75.000 - 85.000; (i) polyisobutenes having a viscosity average molecular weight Mᵥ of 85.000 - 100.000; (j) polyisobutenes having a viscosity average molecular weight Mᵥ of 100.000 - 500.000; (k) polyisobutenes having a viscosity average molecular weight Mᵥ of 500-000 - 1.000.000; and (1) polyisobutenes having a viscosity average molecular weight Mᵥ of 1.000.000 - 2.500.000; wherein the corrosion protecting composition comprises at least 40 % by weight of the amorphous polymer composition.

## Description

### Field of the invention

The present invention relates to a composition for the protection of an article, such as a shaped article. In particular, the present invention is directed a composition for corrosion protection of an article. The article may be made from or consisting essentially of one or more metals, metal compositions or alloys. The present invention relates in particular to a composition for insulating and sealing an article that is in contact with salts, moisture, water and other substances that are corrosive to the article with the effect that said article is protected against corrosion. The present invention also relates to a composition that can be used to protect subterranean articles against corrosion. In the present invention, an article is envisaged to encompass oil lines, oil pipes, gas lines, gas pipes, man hole covers, underground tanks, man hole covers, welding joints, flanges, crane hooks, thermit weldings in divisible shafts below the ground level and in T-joints. The present invention also relates to a composition that can be used to protect materials used in wind power plants (wind turbines), on- and off-shore.

### Background of the invention

For protecting (shaped) articles against corrosion a plurality of materials is employed. Shaped articles such as man hole covers, underground tanks, pipes, lines are often made of metal, metal compositions or alloys and such shaped articles are subject to corrosion since they are in contact with salts, moisture, water and other corrosive components. Corrosion is obviously not preferred since it is detrimental to strength and must therefore be prevented or inhibited to extend the life cycle of the shaped article as much as possible.

Materials for preventing corrosion, in particular long-term corrosion, must have a long-term chemical, physical, mechanical and thermal stability. Moreover, as is well known in the art, the application of such materials is often a laborious, time-consuming and expensive process. The materials must further have a good adhesion on materials used, such as metals, metal compositions, alloys and other materials such as plastic materials or polymers, for example polyethylene and polypropylene. Another requirement is that they have a very low permeability for water, salts, moisture.

Several materials for inhibiting or preventing corrosion are known in the art. Examples of such materials are bitumen and synthetic, thermosetting resins, e.g. epoxy resins and polyurethane resins. These materials have the disadvantage that a hard coating or seal is produced which can easily split or tear under the influence of for example mechanical stress or the like. Another disadvantage of these materials is that, for example, volatile solvents or other harmful components are required for applying such materials. After application of these materials, for example the solvents may evaporate thereby leading to the formation of a microporous seal or coating which is at least permeably for corrosive substances such as salts, water and moisture. Nor are the solvents friendly to the environment.

Bitumen are also permeable for water and do generally not meet the requirements laid down by the KIWA ("Keuringsinstituut voor Waterleidingartikelen"; Dutch Inspection Institute for Water Supply Articles). Moreover, bitumen have in general a glass transition temperature of more than about 10 °C. As a consequence, removal of bitumen is difficult under high temperature conditions, e.g. the summer, and formation of cracks can easily occur during low temperature conditions, e.g., the winter.

Synthetic, thermosetting resins are also easily split or torn as a result of mechanical stress. Moreover, they are not easily removed from the shaped article and easy removal is important when repairs have to be carried out to the shaped article or when the level of protection provided by the thermosetting resin needs to be checked. In addition, cleaning of the shaped article is also difficult which is required when a new seal or coating is applied so that complex and laborious cleaning techniques such as sand blasting have to be employed for cleaning the shaped article to a sufficient extent. It is obvious to the skilled person that if the shaped article is a gas or oil line or pipe line of several hundreds of miles long, replacing or repairing a seal or coating made of synthetic, thermosetting resins is a time-consuming and expensive operation. Finally, applying a seal or coating based on synthetic, thermosetting resins in itself is difficult and laborious.

US 5,898,044 discloses a composition having improved properties when compared with the materials discussed above. This composition comprises an non-polar, non-thermosetting fluid polymer, e.g. polyisobutene, having a glass transition temperature lower than -20 °C and a surface tension of less than 40 mN/m at temperature above its glass transition temperature, and a filler material. The composition may contain an antioxidant such as 2,6-di-t-butyl-4-methylphenol (BHT). The composition can be used in combination with a shrink sleeve, a tape, a belt, a mat or a tape having an open cell structure. However, the composition according to US 5,898,044 has certain disadvantages. For example, if the composition contains 2,6-di-t-butyl-4-methylphenol as the antioxidant, the present inventors have found that the antioxidant leaches out of the composition thereby deteriorating the protecting properties of the composition due to oxidative degradation of the non-thermosetting fluid polymer. This has the disadvantageous effect that the adhesive strength of the composition deteriorates over time when applied to a shaped article. Consequently, this sealing system has a reduced life cycle and requires earlier repair or replacement than desired. Since the sealing system is required to have a long life cycle, i.e. in general 50 years or more, and the application thereof is expensive and laborious, it is obvious to the skilled person skilled that such a sealing system needs improvement. Therefore, the inventors have investigated this technical problem and discovered that the decrease of adhesive strength is caused by leaching out of 2,6-di-t-butyl-4-methylphenol.

WO 99/56055 discloses a method for protecting a metal pipe against corrosion by applying a film to the metal pipe. The film comprises an outer layer, an intermediate layer and an inner layer. The outer layer is preferably made from a polymer, in particular high density polyethylene. The intermediate layer is preferably made of a metal, in particular aluminum. The inner layer comprises preferably an adhesive or mastic. The film must be applied by employing heat. As is obvious to the skilled person, this method is laborious and time-consuming and even inferior to the methods disclosed in US 5,898,044.

WO 99/48997 discloses a composition comprising an organic material that is subjective to oxidative, thermal or light-induced degradation and two or more antioxidants, wherein the organic material may be selected from a wide range of materials including polyisobutene. According to WO 99/48997, the compositions may be used in an extreme wide variety of applications, e.g. in lubricating oils, hydraulic fluids and in metal-working fluids. However, WO 99/48997 does not disclose that the composition can be used for protecting a shaped article against corrosion.

EP A 1086963 discloses an ethylene copolymer composition that can be used as a gasket, e.g. a corrosion-resistant pipe joint. Obviously, such a gasket is placed between two pipe ends when the pipes are joined together to prefer leakage.

EP 1 086 963 discloses a stretch packaging film having a multilayer structure, for example a multilayer film having a non-tacky surface and a tacky surface. Such a multilayer film has as intermediate layer a film layer comprising an ethylene/α-olefin copolymer, a non-tacky layer of LLDPE having a higher density than the ethylene/α-olefin copolymer, and a tacky layer comprising a composition comprising the ethylene/α-olefin copolymer and 2 to 10% of liquid polyisobutene, liquid polybutadiene or the like. The stretch packaging film has a thickness of 10 to 50 µm.

### Summary of the invention

The present invention relates to a composition for the protection of an article against corrosion, said composition comprising:
(i) an amorphous polymer composition comprising a polyisobutene blend having a glass transition temperature of -40 °C or less as determined by differential scanning calorimetry (DSC);
(ii) one or more antioxidants; and
(iii) one or more filler materials,
wherein the amorphous polymer composition comprises two or more polyisobutenes independently selected from the group consisting of:
a) polyisobutenes having a number average molecular weight Mₙ of 500 - 5.000;
b) polyisobutenes having a viscosity average molecular weight Mᵥ of 5.000 - 20.000;
c) polyisobutenes having a viscosity average molecular weight Mᵥ of 20.000 - 35.000;
d) polyisobutenes having a viscosity average molecular weight Mᵥ of 35.000 - 45.000;
e) polyisobutenes having a viscosity average molecular weight Mᵥ of 45.000 - 55.000;
f) polyisobutenes having a viscosity average molecular weight Mᵥ of 55.000 - 65.000;
g) polyisobutenes having a viscosity average molecular weight Mᵥ of 65.000 - 75.000;
h) polyisobutenes having a viscosity average molecular weight Mᵥ of 75.000 - 85.000;
i) polyisobutenes having a viscosity average molecular weight Mᵥ of 85.000 - 100.000;
j) polyisobutenes having a viscosity average molecular weight Mᵥ of 100.000 - 500.000;
k) polyisobutenes having a viscosity average molecular weight Mᵥ of 500-000 - 1.000.000; and
l) polyisobutenes having a viscosity average molecular weight Mᵥ of 1.000.000 - 2.500.000; wherein the corrosion protecting composition comprises at least 40 % by weight of the amorphous polymer composition.

### Detailed description of the invention

The verb "to comprise" and its conjugations as used in this description and in the claims are used in their non-limiting sense to mean that items following the word are included, but items not specifically mentioned are not excluded.

Reference to an element by the indefinite article "a" or "an" does not exclude the possibility that more than one of the element is present, unless the context clearly requires that there is one and only one of the elements. The article "a" or "an" usually means "at least one".

Encompassed in this description are also all possible combinations of embodiments, even if disclosed as separate embodiments. In other words, the skilled person will understand that embodiments can be combined unless specifically stated otherwise.

The term "average molecular weight" used herein may refer to the "number average molecular weight (Mₙ)", "viscosity average molecular weight (Mᵥ)", or "weight average molecular weight (M_{w})" in case the kind of average molecular weight is not defined specifically.

The term "polymer" includes homopolymers and copolymers.

The term "copolymer" includes polymers comprising two or more different monomers.

Commonly, a skilled person uses the term "polyisobutene" in a general manner when referring to an amorphous polymer comprising isobutene monomers as a major component, and optionally further monomers, such as 1-butene, 2-butene and/or butadiene. These amorphous polymers have similar properties, in particular in terms of glass transition temperatures and surface tension. Depending on the desired purity of the polyisobutenes, they may be prepared by various methods (*cf.* Ullmanns "Encyklopädie der technischen Chemie", 4th Ed., Vol. 19, pages 216-223, 1980, and Vol. 13, pages 621-623, 1977). The term "polyisobutene" comprises polymers that comprise isobutene monomers in amounts such as at least about 50 wt.%, at least about 75 wt.%, at least about 90 wt.% or at least about 95 wt.%, and optionally a monomer selected from the group consisting of C₂-C₁₂ alkenes, C₄-C₁₂ alkadienes, and mixtures thereof in amounts such as about 50 wt.% or less, about 25 wt.% or less, about 10 wt.% or less or about 5 wt.% or less, calculated on the total weight of the polyisobutene. As such, according to the general common use, the term "polyisobutene" may encompass polymers such as polybutenes and essentially non-cross-linked butyl rubbers as described below.

The term "polyisobutene homopolymer" is used herein in order to distinguish polyisobutenes having a very high isobutene monomer content from, for example, polyisobutenes having a lower isobutene monomer content as described above, and from polybutenes and butyl rubbers as described below. Thus, the term "polyisobutene homopolymer" as used herein refers to a polymer consisting essentially of isobutene monomers, *i.e.,* a polymer comprising more than about 98 % to about 100 % isobutene, preferably about 99 % to about 100 %, more preferably about 99.5 % to about 100 %, even more preferably about 99.7 % to about 100 %, and in particular about 99.9 % to about 100 %, all by weight of isobutene, based on the total weight of the polymer.

The term "polybutene" used herein refers to a polymer prepared from a C₄-fraction obtained from the oil refining process (such as a C₄-fraction comprising 1-butene, 2-butene, isobutene and optionally butadiene).

The term "butyl rubber" refers to a polymer of about 95 wt.% to about 98 wt.% isobutene and about 2 wt.% to about 5 wt.% isoprene, based on the total weight of the polymer.

The term "mechanical protective layer" refers to a layer that protects the underlying layer or layers mechanically from external effects.

Throughout the application the terms "article" and "shaped article" are used interchangeably.

Advantages of the present invention are that the inventive compositions have an improved setting on the shaped article to be sealed or coated including an improved deformability and a very good adhesion, i.e. a very good adhesive power to the surface of the shaped article. The composition according to the invention does not set and therefore remains soft and is impermeable for water, moisture, salts and is pore-tight. Permeability can be adjusted, for example, by the use and addition of filler materials. The amount of filler materials should not exceed certain thresholds but undermine critical values known to the skilled person in this technical field. An additional and very important feature of the composition of the present invention that if a coating or seal made of the composition according to the invention is mechanically deformed to a relatively small extent, the damage is repaired automatically within a relatively short period of time due to the fluid-like and/or visco-elastic nature of the composition of the invention. That is, the composition has self-recovering properties and any deformation or damage is repaired as a result of flow of the composition into holes or cavities caused by mechanical deformations or soil stresses. The self-repairing effect will particularly be obtained when the composition is wrapped over, for example, tubular objects and fully covered by a flexible outer wrap layer that is applied with tension. The tension remaining in the outer layer will press the composition towards the damaged section. Consequently, the seal or coating comprising the composition according to the invention is not only smooth when applied, but even if indentations, imprints, dents, cavities and the like are caused by mechanical forces, they will disappear in due course and the smooth surface of the seal or coating reappears. Obviously, because of this fluid-like nature any seal or coating comprising the composition according to the present invention does not tear or break and does not build up internal stresses. Likewise, irregularities on the surface of the shaped article are perfectly filled or enveloped by the composition according to the invention where materials according to the state of the art often give rise to problems in such circumstances.

Further, the inventive compositions have improved drip resistance, i.e. no dripping of the composition can be observed after 48 hours at Tₘₐₓ + 20 °C (minimum 80 °C). Such drip resistance is tested on the wrapping tape, meaning that the compound is extruded, calendered or rolled to a thickness of, for example, 2 mm thickness, and the product further comprises a mesh or netting incorporated the compound and optionally a polymeric backing (e.g. PE) on one side of the product The compositions also show good adhesion measured by peel test at 10 mm/min peel rate to steel and plant coatings (like PE, PP, etc.), wherein the peel strength at 23 °C ≥ 0,04 N/mm and at Tₘₐₓ ≥ 0,02 N/mm (test according to ISO 21809-3). The cohesive separation mode and coverage of substrate with remaining compound ≥ 95%. The lap shear test at 10 mm/min shear rate shows a lap shear strength at 23 °C ≥ 0,004 N/mm² and at Tmax ≥ 0,002 N/mm² as well as a cohesive separation mode and coverage of substrate with remaining compound ≥ 95%. The specific electrical insulation resistance of the inventive composition is ≥ 10E+08 Ω.m². It is also observed that impact resistance of complete coating at 23 °C is improved. Further, the cathodic disbondment resistance of artificial defect at 23 °C and at Tₘₐₓ is 0 mm disbondment, no holidays, self-healing completed.

Besides this, the inventive compositions also show tack (i.e. instant adhesion) and ease of application at various ambient temperatures. This tack might be also present at high ambient temperatures, so that the compositions can be easily processed well in warm environments, i.e. in warm or hot outside temperatures.

Other advantages of the composition according to the invention are a high chemical stability and resistance over a wide pH-range, very good electrochemical impedance, a high cathodic protection performance, and essentially no cathodic disbondment. Additionally, the composition can be used within an operating temperature range of -50° to 120 °C, such as - 50 °C to 100 °C, -50 °C to 85 °C or -45 °C to 85 °C. Any temperature, such as -40 °C, -35 °C, -30 °C, -25 °C, -20 °C, -15 °C, -10 °C, -5 °C, -0 °C, 10 °C, 20 °C, 30 °C, 40 °C, 50 °C, 60 °C, 70 °C, 80 °C, 90 °C, 100 °C, or 110 °C can be combined with any of the aforementioned ranges.

There are further advantages of the composition according to the present invention. Most protecting systems require the use of a primer before these systems are applied to the shaped article to provide sufficient adhesion. The use of a primer is unnecessary with the composition according to the present invention which implies that the composition can be applied within a shorter period of time thereby making the operation less expensive. Thus, in one embodiment provided herein is the inventive composition without the use of a primer.

In a desert-like environment sand storms regularly occur. Any protective systems that must be applied by spray techniques cannot be used under such circumstances. However, the present inventors have found that the composition according the present invention can be applied without leading to an inferior protective layer.

Shaped articles can also directly be coated with the composition according to the invention under humid conditions, whereas most systems according to the prior art can generally not be used under such conditions. In one embodiment condensation should not occur when applying the inventive composition.

Shaped articles protected by the composition according to the invention can be easily inspected since a protective layer of the composition according to the invention can easily be removed and, after inspection, be reapplied. Most materials according to the state of the art are far more difficult to remove. Moreover, when removed the surface of the shaped article needs to be thoroughly cleaned before such materials are reapplied. Obviously, a protective layer of the composition according to the invention is also more easily tested.

### Amorphous polymer composition

The amorphous polymer composition of the invention comprises two or more amorphous polymers. The amorphous polymer is preferably a hydrocarbonaceous polymer. It is preferred that the hydrocarbonaceous polymer is essentially non-vulcanised (non-cross-linked) so that its cold flow properties are optimized.

The amorphous polymer may comprise at least one polymer that is of low-molecular weight. The amorphous polymer may comprise at least one polymer that is of mid-molecular weight. The amorphous polymer may comprise at least one polymer that is of high-molecular weight. The number average molecular weights and molecular weight distributions can be determined by gel permeation chromatography (GPC) as is well known in the art.

The average molecular weight may be indicated as a number average molecular weight (Mₙ), a viscosity average molecular weight (Mᵥ), or a weight average molecular weight (M_{w}). In one embodiment, the average molecular weight is a viscosity average molecular weight (Mᵥ).

The amorphous polymer has a glass transition temperature T_{g} of less than about -40 °C, preferably less than about -50 °C, more preferably less than about -60 °C. According to general requirements, the amorphous polymer does not have a melting point or crystallization point when measured with differential scanning calorimetry (DSC) in the temperature range of-120 to +190 °C. The amorphous polymer may have a surface tension of less than about 50 mN/m at 20 °C, preferably less than about 40 mN/m at 20 °C. The glass transition temperature(s) can be determined by DSC known in the art, such as ISO 11357-2. The surface tension can be determined by methods known in the art (*cf.* S. Wu, J. Colloid. Interface. Sci. 31, 153, 1969; D.G. LeGrand, G.L. Gaines, Jr., J. Colloid. Interface Sci. 31, 162, 1969).

In one embodiment the amorphous polymer composition comprises a polyisobutene blend having a glass transition temperature of -40 °C or less as determined by differential scanning calorimetry (DSC). According to the invention, the polyisobutene employed in the composition according to the present invention has a glass transition temperature of less than -40 °C, preferably less than -50 °C and more preferably less than -60 °C. The surface tension of the polyisobutene may be according to the present invention less than 40 mM/m at a temperature above the glass transition temperature of said polyisobutene.

The surface tension parameter is also used to define a certain class of polyisobutenes. In general, polymers having a relatively low surface tension have better flow, wetting and adhesion properties than polymers having a relatively high surface tension. Furthermore, it is also well known in the art that the surface tension increases with increasing molecular weight (and also with increasing viscosity), although the increase above a molecular weight of 2000-3000 is in general negligible and reaches about 1 mN/m of the value at infinite molecular weight. Reference is for example made to J. Bandrup, E.H. Immergut, Polymer Handbook, third edition (1989), page VI/412. Hence, in the present invention the surface tension is used to distinguish between very low molecular weight polyisobutenes from polyisobutenes according to the present invention and therefore defines a minimum of the molecular weight. Hence, the polyisobutenes according to the invention have a surface tension less than 40 nM/m at a temperature that is higher than the glass transition temperature.

The polyisobutene may comprise at least one polyisobutene that is of low-molecular weight. A low-molecular weight polyisobutene has an average molecular weight in the range of about 500 to about 20,000. The polyisobutene may also comprise at least one polyisobutene that is of mid-molecular weight. A mid-molecular weight polyisobutene has an average molecular weight of about 20,000 to about 150,000. The polyisobutene may also comprise at least one polyisobutene that is of high-molecular weight. A high-molecular weight polyisobutene has an average molecular weight of about 150,000 to about 5,000,000 or even more. The average molecular weight may be a number average molecular weight (Mₙ), a viscosity average molecular weight (Mᵥ), or a weight average molecular weight (M_{w}). In one embodiment, the average molecular weight is a viscosity average molecular weight (Mᵥ) or may be as defined below.

The amorphous polymer composition comprises two or more polyisobutenes independently selected from the group consisting of (a) polyisobutenes having a number average molecular weight Mₙ of 500 - 5.000; (b) polyisobutenes having a viscosity average molecular weight Mᵥ of 5.000 - 20.000; (c) polyisobutenes having a viscosity average molecular weight Mᵥ of 20.000 - 35.000; (d) polyisobutenes having a viscosity average molecular weight Mᵥ of 35.000 - 45.000; (e) polyisobutenes having a viscosity average molecular weight Mᵥ of 45.000 - 55.000; (f) polyisobutenes having a viscosity average molecular weight Mᵥ of 55.000 - 65.000; (g) polyisobutenes having a viscosity average molecular weight Mᵥ of 65.000 - 75.000; (h) polyisobutenes having a viscosity average molecular weight Mᵥ of 75.000 - 85.000; (i) polyisobutenes having a viscosity average molecular weight Mᵥ of 85.000 - 100.000; (j) polyisobutenes having a viscosity average molecular weight Mᵥ of 100.000 - 500.000; (k) polyisobutenes having a viscosity average molecular weight Mᵥ of 500-000 - 1.000.000; and (l) polyisobutenes having a viscosity average molecular weight Mᵥ of 1.000.000 - 2.500.000. In one embodiment the amorphous polymer composition may also comprise polyisobutenes having a viscosity average molecular weight Mᵥ of 2.500.000 - 5.000.000 or even more. In one embodiment, in all the definitions provided herein, group (j) is further divided into (jl) polyisobutenes having a viscosity average molecular weight Mv of 100.000 - 150.000 and (j2) polyisobutenes having a viscosity average molecular weight Mv of 150.000 - 500.000. In a preferred embodiment, the amorphous polymer composition comprise two or more of the above-mentioned polyisobutenes, wherein each polyisobutene is from a different of the above-mentioned average molecular weight groups (Mᵥ and/or Mₙ and/or M_{w})₎. In another embodiment two or more different polyisobutenes from the same above-mentioned average molecular weight Mᵥ group are used in the amorphous polymer composition.

In one embodiment, polyisobutenes (a) may have a viscosity average molecular weight Mᵥ of 500 - 5.000. In one embodiment, all the above-mentioned molecular weight ranges are number average molecular ranges. In one embodiment, all the above-mentioned molecular weight ranges are weight average molecular ranges. Polyisobutenes having either a viscosity average molecular weight, or a number average molecular weight, or a weight average polymer weight in any of the above-mentioned ranges (a) to (l) can be combined.

In one embodiment, the amorphous polymer composition may comprise two of the above-mentioned polyisobutenes. In another embodiment, the amorphous polymer composition may comprise three of the above-mentioned polyisobutenes. In another embodiment, the amorphous polymer composition may comprise four of the above-mentioned polyisobutenes. In another embodiment, the amorphous polymer composition may comprise five of the above-mentioned polyisobutenes. In another embodiment, the amorphous polymer composition may comprise six or more of the above-mentioned polyisobutenes.

In one embodiment, two of the above-mentioned polyisobutenes are used, wherein one polyisobutene is used in an amount of 30-40 wt.%, the other in an amount of 60-70 wt.%, based on the total weight of the amorphous polymer composition. In another embodiment, one polyisobutene is used in an amount of 15-30 wt.%, the other in an amount of 70-85 wt.%, based on the total weight of the amorphous polymer composition.

According to the invention, in one embodiment at least one polyisobutene from the groups d) to l) above is used, preferably at least one polyisobutene from the groups f) to l).

Without wishing to be bound to a specific theory, the lower molecular weight polyisobutene will provide tack, flow and faster wetting of substrates, whereas the higher molecular weight polyisobutene will provide stronger adhesion and resistance to shear. By using mixtures of polyisobutenes having different molecular weights the resulting inventive composition has improved properties in terms of tackiness by also having an improved durability. High-molecular-weight grades serve as a valuable elastomeric basis; they exhibit a high cohesive strength and demonstrate brittle failure in tack experiments due to the low entanglement molecular weight. Low-molecular weight grades are liquid-like, suitable tackifiers and promote wetting and adhesion.

It has been shown that with a mixtures of at least two polyisobutenes with different molecular weights competing factors such as the ability of the adhesive to spread and wet the probe, and the resistance of the composition to withdrawal can be harmonized.

In another embodiment, one polyisobutene of the two or more polyisobutenes is used in an amount of at least 50 wt.%, at least 60 wt.%, at least 70 wt.% or at least 80 wt.% and the one or more other polyisobutenes are used in equal amounts to add up to 100 wt.%, all based on the total weight of the amorphous polymer composition.

According to the invention, the amorphous polymer composition comprises about 50 to about 100 wt.% of two or more polyisobutenes, and about 0 to about 50 wt.% of one or more other amorphous polymer(s), based on the total weight of the amorphous polymer composition. In a preferred embodiment, the amorphous polymer composition comprises about 80 to about 100 wt.% of two or more polyisobutenes, and about 0 to about 20 wt.% of one or more other amorphous polymer(s), based on the total weight of the amorphous polymer composition. In an even more preferred embodiment, the amorphous polymer composition comprises about 90 to about 100 wt.% of two or more polyisobutenes, and about 0 to about 10 wt.% of one or more other amorphous polymer(s), based on the total weight of the amorphous polymer composition. In one embodiment, the amorphous polymer composition comprises more than 95 wt.% of two or more polyisobutenes, such as more than 98 wt.% of two or more polyisobutenes, more than 99 wt.% of two or more polyisobutenes or more than 99.5 wt.% of two or more polyisobutenes, based on the total weight of the amorphous polymer composition. Most preferably, the amorphous polymer composition comprises about 100 wt.% of two or more polyisobutenes. In a still further embodiment, the amorphous polymer composition comprises 100 wt.% of two or more polyisobutenes. All the above is based on the total weight of the amorphous polymer composition.

In one embodiment, the amount of the polyisobutene with the highest viscosity average molecular weight based on the total weight of the corrosion protecting composition (i.e. 100% of the corrosion protecting composition) is more than 32 wt.%, such as more than 33 wt.%, more than 34 wt.%, more than 35 wt.%, more than 36 wt.%, more than 37 wt.%, more than 38 wt.%, more than 39 wt.%, or more than 40 wt.%. In a further embodiment, the amount of the polyisobutene with the highest viscosity average molecular weight based on the total weight of the corrosion protecting composition (i.e. 100% of the corrosion protecting composition) is lower than 20 wt.%, such as lower than 19 wt.%, lower than 18 wt.%, lower than 17 wt.%, lower than 16 wt.%, or lower than 15 wt.%.

The one or more other amorphous polymer(s) are selected from the group consisting of suitable polymers, such as, but not limited to, butyl rubbers, ethene-propene copolymers, ethene-butene copolymers, ethane-propene-butene terpolymers, amorphous propene copolymers, atactic polypropenes, poly(2-methyl-1-pentene) and mixtures thereof. According to a more preferred embodiment of the present invention, the one or more other amorphous polymer(s) are selected from the group consisting of polybutenes, butyl rubbers, atactic polypropene, copolymers of propene and a C₂-C₁₂ alkene other than propene (and optionally a diene), copolymers of ethene and a C₂-C₁₂ alkene other than ethene (and optionally a diene), and mixtures thereof. According to an even more preferred embodiment of the present invention, the one or more other amorphous polymer(s) are selected from the group consisting of ethene-propene copolymers, ethene-butene copolymers, ethene-propene-butene terpolymers, ethene-propene-diene copolymers, polybutenes, butyl rubbers, atactic polypropenes and mixtures thereof.

The one or more other amorphous polymer(s) may have a glass transition temperature of less than about -20 °C, more preferably less than -40 °C and most preferably less than -60 °C. Additionally, it is preferred that the olefin polymer has a surface tension of less than 40 mN/m at 20 °C.

### Filler material

The composition of the invention comprises one or more (inert) filler(s) (i.e. filler material(s)).

In one embodiment, the filler comprises one or more inert inorganic and/or organic filler(s). Examples of (inert) inorganic fillers are inorganic minerals, salts and/or oxides, such as, for example, chalk, boron sulphate, calcium carbonate, calcium sulphate, calcium oxide, aluminum hydroxide, aluminum oxide, magnesium oxide, silicon dioxide, fumed silica, titanium dioxide, ground quartz, glass, talc, slate and kaolin. In one embodiment, the filler comprises calcium carbonate. In one embodiment, the filler comprises fumed silica. In one embodiment, the filler comprises kaolin. In one embodiment, the filler comprises calcium carbonate and kaolin. In one embodiment, the filler comprises calcium carbonate and fumed silica. In one embodiment, the filler comprises calcium carbonate, kaolin and fumed silica.

In one embodiment, the corrosion protecting composition of the invention comprises one or more fillers in the form of a pigment. The pigment may be selected from any pigment generally used in this technical field. The corrosion protecting composition may comprise a pigment in the amount of 0.1 wt.%, 0.2 wt.%, 0.3 wt.%, 0.4 wt.%, or 0.5 wt.% or more, all based on the total weight of the composition. In one embodiment the corrosion protecting composition comprises one pigment. In another embodiment the corrosion protecting composition comprises a mixture of two or more pigments.

In one embodiment, the filler comprises one or more organic filler. Fillers of an organic nature can be but are not limited to cellulose, polystyrene, polyvinyl chloride, polyethene, polypropene, polyisoprene, rubber, polyamide and polyester or mixtures thereof. Polyethene and polypropene may be present in the amorphous polymer composition that is part of the corrosion protecting composition. In one embodiment, the organic filler is a polymeric filler. When said polymers are applied as a filler material, the requirements of, *e.g.,* glass transition temperature or molecular weight as specified for the amorphous polymer composition do not have to be met. Syndiotactic polypropene with a glass transition temperature higher than -20 °C may be used as a filler.

The total amount of the one or more filler(s) present in the corrosion protecting composition is in the range of 35 to 80 wt.%, preferably 40 to 75 wt.%, more preferably 45 to 70 wt.% and most preferably 50 to 70 wt.%, all based on the total weight of the corrosion protecting composition. In one embodiment, the total amount of filler present in the corrosion protecting composition is at least 30 wt.%, at least 40 wt.%, at least 50 wt.%, or at least 60 wt.%, all based on the total weight of the corrosion protecting composition.

According to the present invention all combinations of the above-mentioned fillers are encompassed. In one embodiment mixtures of two or more of any of the above-mentioned fillers in any of the above-mentioned amounts are encompassed by the present invention, such as three or more of any of the above-mentioned fillers, four or more of any of the above-mentioned fillers, five or more of any of the above-mentioned fillers, six or more of any of the above-mentioned fillers, or even more different fillers.

### Antioxidants

Properties of polymers, e.g. polyisobutenes, are strongly influenced by degradation reactions that may occur during production and uses. In many cases these degradation reactions are initiated by the presence of oxygen which may be catalyzed by light, heat, water and metal ions. In initiation reactions free radicals are formed that in propagation reactions lead to the formation of unstable hydroperoxides. The hydroperoxides are the main initiators of thermal degradation and photodegradation processes.

Antioxidants are commonly used to prevent such degradation reactions wherein primary antioxidants interfere directly with propagation reactions leading to degradation, i.e. that they terminate such propagation reactions, whereas secondary antioxidants induce decomposition of the hydroperoxides.

The antioxidant(s) used in the present invention may be a primary and/or a secondary antioxidant, a multifunctional antioxidant (i.e., an antioxidant combining primary and secondary antioxidant functions) or a lactone. The antioxidant may comprise a combination of two or more antioxidants. In one embodiment, the corrosion protecting composition comprises two antioxidants. In one embodiment, the corrosion protecting composition comprises three antioxidants. More preferably, the antioxidant is an anti-oxidant composition comprising at least two antioxidants, wherein it is preferred that the antioxidant composition comprises a primary antioxidant and a secondary antioxidant. According to a preferred embodiment, the primary antioxidant is selected from the group consisting of sterically hindered phenol compounds.

The one or more antioxidants may be present in an amount of up to 5 wt.%. For example, the one or more antioxidants may be present in an amount of about 0.01 wt.% to about 5 wt.%, such as about 0.05 to about 5 wt.%, preferably about 0.1 to about 4 wt.%, more preferably of about 0.2 to about 3 wt.% and most preferably about 0.3 to about 2 wt.%, all based on the total weight of the corrosion protection composition of the invention. In one embodiment, the one or more antioxidants are present in an amount of about 0.1 wt.%, 0.2 wt.%, 0.3 wt.%, 0.4 wt.%, 0.5 wt.%, 0.6 wt.%, 0.7 wt.%, 0.8 wt.%, 0.9 wt.% or 1 wt.%, based on the total weight of the composition of the invention. In one embodiment, the one or more antioxidants are present in an amount of about 0.3 wt.%. In another embodiment, the one or more antioxidants are present in an amount of about 0.4 wt.%. In another embodiment, the one or more antioxidants are present in an amount of about 0.5 wt.%.

According to the invention, the primary antioxidants may be selected from the group consisting of sterically hindered phenol compounds, sterically hindered alkylthiomethylphenol or arylthiomethylphenol compounds, and secondary aromatic amines, but are not limited thereto.

In one embodiment, the sterically hindered phenol compounds are selected from the compounds according to formula (I): 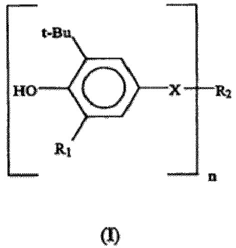 wherein R₁ is a C₁-C₄-alkyl group; n is 1, 2, 3 or 4; X is -CH₂-, -CH₂-CH₂-C(O)-Y- or -CH₂-C(O)-CH₂-CH₂-; Y is -O- or -NH- is; and if n=2, then X is -CH₂-CH₂-C(O)-Y- wherein Y is bonded to R₂, and R₂ is a C₂-C₁₂-alkylene group, a C₄-C₁₂-alkylene group that is interrupted by one or more oxygen atoms or sulphur atoms, or is a direct bond; and if n = 4, then X is -CH₂-CH₂-C(O)-Y- wherein Y is bonded to 2 and R₂ is C₄-C₁₀-alkanetetrayl.

The C₁-C₄ group encompasses methyl, ethyl, n-propyl, i-propyl, n-butyl, i-butyl and t-butyl. According to the invention, the preferred meaning for R₁ is t-butyl.

The C₂-C₁₂-alkylene group is preferably branched or linear. Examples of such groups are ethylene, propylene, tetramethylene, pentamethylene, hexamethylene, heptamethylene, octamethylene, decamethylene and dodecamethylene. R₂ is preferably a C₂-C₁₀-alkylene group, more preferably a C₂-C₈-alkylene group and in particular a C₄-C₈-alkylene group, typically hexamethylene.

The C₄-C₁₂-alkylene group that is interrupted by one or more oxygen atoms or sulphur atoms is preferably a C₄-C₁₀-alkylene group, more preferably a C₄-C₈-alkylenegroup and in particular a C₄-C₆-alkylene group. Examples of suitable groups are -CH₂ -O-CHz-CHz-O-CH₂-, -CH₂-(O-CH₂-CH₂)₂-O-CH₂-, -CH₂-(O-CH₂-CH₂)₃-O-CH₂-, -CH₂-(O-CH₂-CH₂-)₄-O-CHz-, -CHz-CHz-O-CHz-CHz-O-CHz-CHz- and -CH₂CH₂-S-CH₂-CH₂-.

Particularly preferred C₄-C₁₂-alkylene groups that are interrupted by one or more oxygen atoms or sulphur atoms are -CHz-CHz-O-CHz-CHz-O-CHz-CHz- and -CH₂-CH₂-S-CH₂-CH₂-.

According to the invention, C₄-C₁₀-alkanetetrayl is preferably (-CH₂)₄C.

Preferred sterically hindered phenol compounds according to the invention are those wherein in formula (I) n = 1 and R₂ is C₂-C₂₀-alkyl. However, compounds that are more preferred are those wherein in formula (I) n = 2, R₂ is C₂-C₈-alkylene, C₄-C₈-alkylenethat is interrupted by a sulphur atom or an oxygen atom, or, if Y is -NH-, R₂ is additionally a direct bond and those wherein in formula (I) n = 4 and R₂ is C₄-C₈-alkanetetrayl. Other preferred sterically hindered phenol compounds according to the invention are those wherein in formula (I) R₁ is t-butyl, n = 1, 2 or 4, X is -CH₂-CH₂-C(O)-Y-, Y is an oxygen atom or -NH- and if n = 1, then R₂ is C₁₄-C₁₈-alkyl; and if n=2, R₂ is C₄-C₆-alkylene or C₄-C₆-alkylene interrupted by an oxygen atom; and if n = 4, R₂ is C₄-C₈-alkanetetrayl.

Such sterically hindered phenol compounds may be, for example, 2,6-di-t-butyl-4-methylphenol, Irganox^{®} 1330, Irganox^{®} 1010, Irganox^{®} 1098, Irganox^{®} 1076, Irganox^{®} 245, Irganox^{®} 259, Irganox^{®} 1035, Irganox^{®} 2246, Irganox^{®} 3114 and Irganox^{®} 3125, the sterically hindered alkylthiomethylphenol Irganox^{®} 1520, *i.e.,* 2,4-di-octylthiomethyl-6-methyl phenol, and the secondary aromatic based antioxidant comprising (polymerized) 1,2-dihydro-2,2,4-trimethylquinoline, such as for example Agerite^{®} MA.

Instead of or additional to the sterically hindered phenol compounds, a sterically hindered alkylthiomethylphenol or arylthiomethylphenol compound or a mixture of such compounds may be used. Such compounds are for example disclosed in US 4,358,616. A suitable and preferred example of sterically hindered alkylthiomethylphenol or arylthiomethylphenol compound is Irganox 1520, i.e. 2,4-di-octylthiomethyl-6-methyl phenol.

According to the invention, the secondary antioxidant may be selected from the group consisting of phosphites and thioesters, but is not limited thereto. Suitable phosphites are for example disclosed in US 5,763,512. According to the invention, the phosphites are preferably selected from the compounds according to formulae (II-IV): 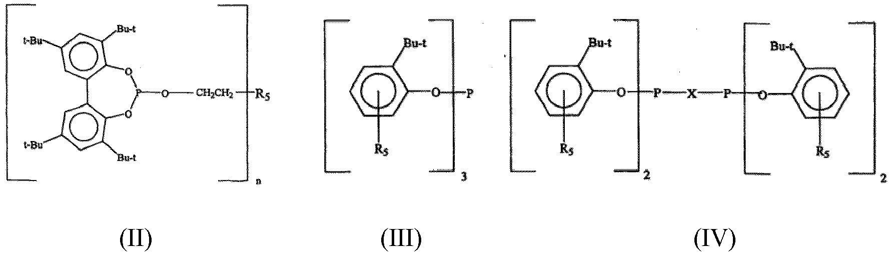 wherein R is a carbon atom, a nitrogen atom or an oxygen atom and wherein n is 2, 3 of 4; wherein R₅ is a C₁-C₄-alkyl group and X is a group as defined above for R₂ of formula (I) or a C₆-C₁₈-hydrocarbyl group, wherein the hydrocarbyl group comprises one or more arylene groups.

According to the invention, the secondary antioxidants are preferably selected from the group consisting of phosphites and thio-esters. Suitable secondary antioxidants are for example Irgafos^{®} 168, Irgafos^{®} 12 and Irgafos^{®} P-EPQ (all phosphites), and Lowinox^{®} TBM-6, BNX^{®} DLTDP (CAS No. 123-28-4) and Morstille 18 DSTDP (all thio-esters). The thioesters are preferably selected from the group of compounds represented by formula (VI): S-(R₆-COOR₇)₂, wherein R₆ is a C₁-C₁₂ alkylene group, preferably a C₁-C₆ alkylene group, and wherein R₇ is a C₁-C₁₂ alkyl group, a C₆-C₁₂ aryl group, a C₇-C₁₂ alkaryl group or a C₇-C₁₂ aralkyl group.

In addition to the primary and secondary antioxidants, the antioxidant composition preferably comprises a further antioxidant selected from the group of lactones represented by formula (V): 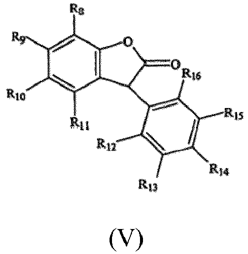 wherein Rs-Rn are independently hydrogen, halogen or C₁-C₁₂ alkyl and wherein R₁₂- R₁₆ are independently hydrogen, halogen or C₁-C₁₂ alkyl. Preferably, R₈-R₁₁ and R₁₂-R₁₆ are independently hydrogen or C₁-C₁₂ alkyl. More preferably, R₈ and R₁₀ are C₁-C₆ alkyl groups, R₉ and R₁₁ are hydrogens and R₁₂-R₁₆ are independently hydrogen or C₁-C₁₂ alkyl groups. Even more preferably, R₈ and R₁₀ are C₁-C₆ alkyl groups, R₉ and R₁₁ are hydrogens, R₁₄ and R₁₅ are C₁-C₆ alkyl groups and R₁₂, R₁₃ and R₁₆ are hydrogens. Such lactones are for example disclosed in US 6,310,220 .

The multifunctional antioxidant preferably comprises a primary and a secondary anti-oxidant function. Examples of multifunctional antioxidants are Irganox^{®} L 115 and Irganox^{®} 565.

An example of a lactone that can be used as antioxidant is Irganox^{®} HP-136.

According to the invention, the composition preferably comprises a primary antioxidant, wherein the primary antioxidant is preferably selected from the group of sterically hindered phenol compounds and secondary aromatic amines, most preferably from the group of sterically hindered phenol compounds.

The composition may comprise a secondary antioxidant, wherein the secondary antioxidant is preferably selected from the group of phosphites.

In one embodiment, the composition comprises a combination of a primary antioxidant and a secondary antioxidant, preferably a combination of a primary and a secondary antioxidant, which have a synergistic effect. A suitable combination is Irganox^{®} 1010 and Irgafos^{®} 168.

In one embodiment, the composition comprises a combination of a primary antioxidant, a secondary antioxidant and a lactone. In one embodiment, the lactone is Irganox^{®} HP-136.

### Wrapping tape

The invention also relates to a tape for the protection of an article against corrosion, wherein the tape comprises a layer comprising the corrosion protecting composition of the invention. Thus, the present invention also solves the problem by providing tapes for the protection against corrosion of articles. The terms tape and wrapping tape are used herein interchangeably.

Provided herein is a (wrapping) tape comprising a layer comprising a corrosion protecting composition comprising:
(i) an amorphous polymer composition comprising a polyisobutene blend having a glass transition temperature of -40 °C or less as determined by differential scanning calorimetry (DSC);
(ii) one or more antioxidants; and
(iii) one or more filler materials,
wherein the amorphous polymer composition comprises two or more polyisobutenes
independently selected from the group consisting of:
a) polyisobutenes having a number average molecular weight Mₙ of 500 - 5.000;
b) polyisobutenes having a viscosity average molecular weight Mᵥ of 5.000 - 20.000;
c) polyisobutenes having a viscosity average molecular weight Mᵥ of 20.000 - 35.000;
d) polyisobutenes having a viscosity average molecular weight Mᵥ of 35.000 - 45.000;
e) polyisobutenes having a viscosity average molecular weight Mᵥ of 45.000 - 55.000;
f) polyisobutenes having a viscosity average molecular weight Mᵥ of 55.000 - 65.000;
g) polyisobutenes having a viscosity average molecular weight Mᵥ of 65.000 - 75.000;
h) polyisobutenes having a viscosity average molecular weight Mᵥ of 75.000 - 85.000;
i) polyisobutenes having a viscosity average molecular weight Mᵥ of 85.000 - 100.000;
j) polyisobutenes having a viscosity average molecular weight Mᵥ of 100.000 - 500.000;
k) polyisobutenes having a viscosity average molecular weight Mᵥ of 500-000 - 1.000.000; and
l) polyisobutenes having a viscosity average molecular weight Mᵥ of 1.000.000 - 2.500.000;
wherein the corrosion protecting composition comprises at least 40 % by weight of the amorphous polymer composition. In one embodiment the composition of the polyisobutenes may be as described in detail above.

In addition, the tape comprises a first layer (a) comprising backing made from for example a polymer or a copolymer as defined below (film, non-woven fabric etc.). The inventive corrosion protecting composition is applied as second layer (b) onto one side of the first layer (a).

The wrapping tape according to the invention can be easily applied to the shaped article to be protected since the second layer can easily be deformed. Moreover after being applied, the wrapping tape can also be removed. Although due to cohesive breakage it does leave some residuals on the surface of the shaped article (according to general industrial requirements and standards, the cohesive separation will leave the substrate covered for 95% or more with the inventive composition), these residuals can be easily removed by scraping or nay other suitable removing technique. Additionally, the wrapping tape can in particular be applied to pipe fittings, such as T-joints, elbows, bends, flanges and the like. Furthermore, the wrapping tape according to the invention can suitably be used for repairing damaged or corroded shaped articles that were already provided with some protecting material according to the state of the art, provided that the surface of the shaped article is cleaned to a St-2 level according to the NEN-EN-ISO standard 8501-1. Finally, as described above, the wrapping tape has self-repairing properties due to the fluid and/or visco-elastic nature of the second layer (b).

If necessary, the wrapping tape may comprise a further layer (c) to protect the second layer (b). When transported such a protecting layer (c) enables that the tape can easily be wound on a bobbin or spool or other suitable means, and prevents inter-adhesion of the layers of the tape.

Layer (c) may have the function of a release liner, which is removed from the tape during application of the tape. Layer (c) may then comprise any suitable material for a release liner, *e.g.,* paper, siliconized PET, an C₂-C₂₀ alkene polymer or copolymer, or the like. In addition, said layer also serves as a separation layer in order to increase easy of application and as a layer to enable proper adhesion of a subsequently applied mechanical protective layer.

Moreover, in one embodiment the wrapping tape preferably may have between layers (a) and (b) a further layer (d) comprising a reinforcing net-like layer having a woven, knitted or spool-knitted structure and that can be deformed in two orthogonal directions. The reinforcing net-like layer can be manufactured from polyolefin fibres, e.g. fibres made from ethane homopolymers or copolymers, propene homopolymers or copolymers, polyester, but is not limited to, as is well known in the art.

Layer (a) of the wrapping tape may comprise a polymer or a copolymer. For example, layer (a) may be made of one or more α-olefins and/or diolefins, ethylenetetrafluoroethylen (ETFE), nylon, polyurethane and the like. Further examples of such polymers and copolymers are EP(D)M elastomers, ethylene homopolymers, ethylene-α-olefin copolymers, propylene homopolymers and propylene-α-olefin copolymers. If the copolymer is an ethylene copolymer which is a preferred embodiment of the invention, the α-olefin is then preferably a C₃-C₁₂-α-olefin, in particular a C₃-C₈-α-olefin. Examples of suitable α-olefins are propene, 1-butene, 1-hexene and 1-octene. The ethylene copolymers preferably comprise 0.1 to 30 wt.%, in particular 0.1 to 20 wt.% α-olefin. The density of the ethylene homopolymers or copolymers (as measured according to ASTM D 1248) is preferably 0.800-0.975 g/cm³, in particular 0.850-0.950 g/cm³. The melt index (as measured according to ASTM D 1238) of the ethylene homopolymers or copolymers is preferably 0.1 to 50 g/min., in particular 0.2 to 20 g/min. Layer (a) of the wrapping tape comprises preferably one or more of the following polymers: low density polyethylene (LDPE), linear low density polyethylene (LLDPE), medium density polyethylene (MDPE), high density polyethylene (HDPE), an ethene propene copolymer, an ethene propene diene copolymer. According to a preferred embodiment of the invention, layer (a) of the wrapping tape comprises LDPE, MDPE, HDPE or LLDPE or a combination thereof, such as preferably a combination of LDPE and MDPE.

Layer (a) may comprise more than one layer and can for example be a multilayer film comprising of LLDPE outer layers and a HDPE inner layer. Such multilayer films are well known in the art. Layer (a) may further comprise different additives such as pigments and fillers.

The tape of the invention has a total thickness that is suitably for the respective purpose. For example, the tape has a total thickness of about 1 to about 20 mm, more preferably of about 1 to about 15 mm, even more preferably of about 1 to about 10 mm and most preferably of about 1 to about 7 mm. The width of the tape can be adjusted as desired or as suitable, but is preferably about 2.0 to about 100.0 cm, more preferably about 2.5 to about 75.0 cm, even more preferably about 3.0 to about 70.0 cm, even more preferably about 4.0 to about 65.0 cm and most preferably about 5.0 to about 60.0 cm. The length of the tape can also be adjusted as desired or as suitable. A tape with a length of for example several meters may be wound around a bobbin or spool prior to use. However, the tape may also be in the form of a sheet. The length and width of said sheet can be adjusted as desired or as suitable.

In one embodiment, the tape is applied to the article to be protected while the article is in a dry environment. In one embodiment, the tape is applied to the article while the article is in a wet or moist environment. In other words, the tape can be applied to a surface of the article while the surface or part thereof is wet or moist, *i.e.,* water is present on a surface of the article or part thereof, during application of the tape. Hence, drying the surface of the article prior to application of the tape is not necessary. The tape can directly be applied to a (partly) submerged article, to an article in a splash zone, or to an article that has a wet surface due to, e.g., condensation of moisture on the surface of the article, such as a sweating pipeline. The surface of the article to be protected generally does not need extensive pre-treatment. However, some pre-treatments may enhance the adhesive properties of the adhesive composition. For instance, the article may comprise a base layer of a pre-coat, e.g. a pre-coat based on an epoxy resin. In another embodiment of the present invention, the article may have as base layer a polyolefin layer. Consequently, one application of the adhesive composition is the use thereof in a process for manufacturing precoated steel pipes wherein the pipes are provided with a precoating, preferably a polyolefin coating, preferably a polyethene or a polypropene coating.

In one embodiment, the tape may be applied while parts of the article are in a wet or moist environment while other parts of the article are in a dry environment.

The invention also relates to a process for the manufacture of a wrapping tape for the protection of a shaped article against corrosion having the composition as provided herein. In addition, in the process for the manufacture of a tape for the protection of an article against corrosion the corrosion protecting composition of the invention is laminated onto a film, said film is as described above and preferably comprising a polymer or a copolymer of one or more (substituted) α-olefins and/or diolefins, such as one or more C₂-C₂₀ α-alkene(s) and/or alkadiene(s), a polyvinyl chloride (PVC), a polyurethane, or a non-woven polyester cloth as defined above for layer (c) of the tape of the invention.

After said lamination step, the surface of layer (b) not being in contact with layer (a) is preferably protected by a layer (c), wherein layer (c) may be any suitable material described above.

If a layer (d) is present between layers (a) and (b) as described above, layers (a) and (d) are first laminated where after a layer (b) is applied to the surface of layer (d) opposite the surface of layer (d) that is in contact with layer (a). The thickness of layer (b) is controlled by e.g. a knife.

After the wrapping tape is manufactured, it is preferably wrapped around a bobbin or a spool.

Another important advantage of the wrapping tape according to the invention is the following. It is known in the art that sulphate-reducing bacteria are frequently encountered in defects in the protective layer of subterranean shaped articles. These bacteria are capable of producing hydrogen sulphide that is known to promote metal corrosion (cf. for example S. Grobe et al., Materials and Corrosion, Vol. 47, pages 413-424, 1996 ; M.J. Feijo et a., Materials and Corrosion, Vol. 651, pages 691-697, 2000 ). Since during the application of a protective layer infection and inclusion may occur, it is essential that components that promote bacterial growth do not permeate during the protective layer. Moreover, it is believed that at least one of the essential elements (in particular carbon, hydrogen, sulphur, and nitrogen) must be absent in order to prevent the growth of such bacteria. Since the wrapping tape according to the invention has a low permeability for gases (air, i.e. nitrogen, oxygen and water vapor) and is water resistant and is free of nitrogen and sulphur containing compounds (unless a particular antioxidant is used that contains nitrogen; it is believed, however, that this is not detrimental given the fact that only small amounts of antioxidants are added), the inventors believe that with the wrapping tape according to the invention corrosive problems due to such microorganisms do not occur.

Finally, it has been noted that with protective systems like butyl rubber (which is spirally applied to shaped articles such as pipe lines) corrosion occurs in the areas of overlap between different windings ("spiral corrosion") due to the fact that in the areas of overlap the rather stiff butyl rubber windings are not in intimate contact so that occlusion of air, water vapour occurs. Such problems do, however, not occur with the wrapping tape according to the invention because of the fluid and/or visco-elastic nature of layer (b).

The present invention further relates to a process for covering a shaped article with a wrapping tape, wherein the wrapping tape comprises:
(a) a first layer comprising a film, said film comprising a polymer or a copolymer of one or more α-olefins and/or diolefins, and
(b) a second layer comprising a composition comprising:
   (i) an amorphous polymer composition comprising a polyisobutene blend having a glass transition temperature of -40 °C or less as determined by differential scanning calorimetry (DSC);
   (ii) one or more antioxidants; and
   (iii) one or more filler materials,
      wherein the amorphous polymer composition comprises two or more polyisobutenes independently selected from the group consisting of:
      a) polyisobutenes having a viscosity average molecular weight Mᵥ of 500 - 5.000;
      b) polyisobutenes having a viscosity average molecular weight Mᵥ of 5.000 - 20.000;
      c) polyisobutenes having a viscosity average molecular weight Mᵥ of 20.000 - 35.000;
      d) polyisobutenes having a viscosity average molecular weight Mᵥ of 35.000 - 45.000;
      e) polyisobutenes having a viscosity average molecular weight Mᵥ of 45.000 - 55.000;
      f) polyisobutenes having a viscosity average molecular weight Mᵥ of 55.000 - 65.000;
      g) polyisobutenes having a viscosity average molecular weight Mᵥ of 65.000 - 75.000;
      h) polyisobutenes having a viscosity average molecular weight Mᵥ of 75.000 - 85.000;
      i) polyisobutenes having a viscosity average molecular weight Mᵥ of 85.000 - 100.000;
      j) polyisobutenes having a viscosity average molecular weight Mᵥ of 100.000 - 500.000;
      k) polyisobutenes having a viscosity average molecular weight Mᵥ of 500-000 - 1.000.000; and
      l) polyisobutenes having a viscosity average molecular weight Mᵥ of 1.000.000 - 2.500.000;
      wherein the corrosion protecting composition comprises at least 40 % by weight of the amorphous polymer composition.

According to the invention, wherein the surface of the shaped article is preferably cleaned to a St-2 level according to NEN-EN-ISO Standard 8501-1 prior to the application of the wrapping tape. The St-2 level is defined as: "Thorough scraping and wire-brushing; hand tools and/or machine brushing/grinding is acceptable. Loose mill scale, rust and foreign matter must be fully removed. Finally, the surface should be cleaned with a vacuum cleaner, clean dry compressed air or a clean brush. Surface should have a faint metallic sheen (no anchor pattern is required)".

The wrapping tape is preferably wrapped around the shaped article such that subsequent layers of the wrapping tape overlap each other, wherein - depending on the thickness of the tape-the overlap has preferably a width of at least 1.0 mm, more preferably a width of at least 5.0 mm and in particular a width of at least 10.0 mm. Greater widths, e.g. about 50.0 mm are also possible but that is also dependent from the width of the wrapping tape used as will be obvious to the skilled person. It is, however, necessary that the width of the overlap is at least 1.0 mm to obtain a proper sealing. Moreover, the first and last windings are preferably applied essentially perpendicular to the wrapping direction, that is if the shaped article is for example a pipe line, the first and last windings are applied essentially circumferential and essentially perpendicular to the length of the pipe line. If the end of a first wrapping tape is reached, a second wrapping tape may be applied where the first wrapping tape expired, provided that the longitudinal overlap is at least 1.0 mm, preferably at least 5.0 mm and most preferably at least 10.0 mm. The wrapping tape is preferably applied without tension.

In one embodiment of the invention, it is preferred that after the wrapping tape has been applied, an outerwrap tape is wrapped around the shaped article. In one embodiment the outerwrap is a polymeric tape or heat shrinkable tape. Preferably the outerwrap tape is made from materials comprising one or more polyolefins that are preferably selected from the group consisting of ethylene homopolymers, ethylene copolymers, ethylene vinylchloride copolymers, vinylchloride polymers and ethylene vinylacetate copolymers. According to a preferred embodiment of the invention, the outerwrap tape is a PVC film. The outerwrap tape is preferably applied with tension.

Preferably, the outerwrap tape is wrapped such that the width of the overlap is at least 20% of the width of the outerwrap tape, preferably at least 40% of the width of the outerwrap tape.

The applications of the inventive composition is in particular in the field of corrosion protection. Consequently, according to the invention, the article is therefore oil lines, oil pipes, gas lines, gas pipes, man hole covers, underground tanks, man hole covers, welding joints, flanges, crane hooks, thermit weldings in divisible shafts below the ground level, bridges, buildings, rolling stocks, in T-joints and the like, but is not limited thereto. The article to be protected may also be any part of a wind turbine or wind power plant, both on- or off-shore. Furthermore, it is preferred that the article is essentially made of metal, metal compositions or metal alloys, for example steel or concrete, most preferably of steel.
The composition of the invention fulfils all necessary industry requirements, such as the main standard for oil & gas industry (ISO 21809-3:2016).

The invention will be further illustrated by the following examples which are, however, not intended to restrict the scope of the invention by any means.

### Examples

### Example 1

A composition containing only V1500 (PIB having a viscosity average molecular weight of Mv 500 - 5.000) was prepared. The composition does not meet the requirements for drip resistance, adhesion, lap shear, and impact resistance.

In order to attempt to meet these requirements a high percentage of fillers has been added. However, due to the high amount of fillers, the composition became too dry and its anticorrosion properties were compromised because the composition became permeable for water and oxygen. Also, the requirements for specific electrical insulation resistance were not met because water was able to permeate through the composition.

By replacing a substantial amount of the V1500 by Oppanol B 10 (Mv 35.000 - 45.000) within the ranges as described herein, the composition met all of the above requirements and all requirements described herein.

### Example 2

A composition containing Oppanol B10 was prepared. In testing, Tₘₐₓ was lower than 50 °C, which is too low to achieve the necessary requirements of about 70 °C.

A substantial amount of Oppanol B10 was replaced by Oppanol B12 (Mv 55.000 - 65.000) within the ranges as described herein. The composition met all necessary requirements, also Tₘₐₓ.

### Example 3

A composition should be prepared having a Tₘₐₓ of above 70 °C. First, a composition was prepared containing Oppanol B12. In testing, Tₘₐₓ was lower than 70 °C.

A substantial amount of Oppanol B12 was replaced by Oppanol B15 (PIB Mv 85.000 - 100.000) within the ranges as described herein. Tₘₐₓ of this composition was above 70 °C.

All above Examples have passed at least the required tests for drip resistance, adhesion, peel strength at 23 °C, cohesive separation mode and coverage of substrate with remaining compound, lap shear test at 10 mm/min shear rate, electrical insulation resistance, impact resistance of complete coating, and cathodic disbondment resistance. All compositions provide excellent tack at ease of application at various ambient temperatures.

## Claims

1. A composition for the protection against corrosion of an article, wherein the corrosion protecting composition comprises:
(i) an amorphous polymer composition comprising a polyisobutene blend having a glass transition temperature of -40 °C or less as determined by differential scanning calorimetry (DSC);
(ii) one or more antioxidants; and
(iii) one or more filler materials,
wherein the amorphous polymer composition comprises two or more polyisobutenes independently selected from the group consisting of:
a) polyisobutenes having a number average molecular weight Mₙ of 500 - 5.000;
b) polyisobutenes having a viscosity average molecular weight Mᵥ of 5.000 - 20.000;
c) polyisobutenes having a viscosity average molecular weight Mᵥ of 20.000 - 35.000;
d) polyisobutenes having a viscosity average molecular weight Mᵥ of 35.000 - 45.000;
e) polyisobutenes having a viscosity average molecular weight Mᵥ of 45.000 - 55.000;
f) polyisobutenes having a viscosity average molecular weight Mᵥ of 55.000 - 65.000;
g) polyisobutenes having a viscosity average molecular weight Mᵥ of 65.000 - 75.000;
h) polyisobutenes having a viscosity average molecular weight Mᵥ of 75.000 - 85.000;
i) polyisobutenes having a viscosity average molecular weight Mᵥ of 85.000 - 100.000;
j) polyisobutenes having a viscosity average molecular weight Mᵥ of 100.000 - 500.000;
k) polyisobutenes having a viscosity average molecular weight Mᵥ of 500-000 - 1.000.000; and
l) polyisobutenes having a viscosity average molecular weight Mᵥ of 1.000.000 - 2.500.000;
wherein the corrosion protecting composition comprises at least 40 % by weight of the amorphous polymer composition.

2. The composition of claim 1, wherein the amount of antioxidants and filler materials is less than 60 wt.% based on the total weight of the composition.

3. The composition of claim 1 or 2, wherein the amount of the polyisobutene with the highest viscosity average molecular weight in the corrosion protecting composition is more than 32 wt.%.

4. The composition of any one of claims 1 to 3, wherein the one or more antioxidants are present in an amount of up to 5 wt.% based on the total weight of the corrosion protection composition.

5. The composition of any one of claims 1, 3 or 4, wherein one or more filler materials are present in an amount of 35 to 80 wt.%, based on the total weight of the corrosion protecting composition.

6. Wrapping tape for the protection of an article, comprising (a) a first layer, and (b) a second layer comprising the corrosion protecting composition according to any one of claims 1 to 5.

7. The wrapping tape of claim 6, wherein the first layer is a film comprising a polymer or a copolymer of one or more α-olefins and/or diolefins.

8. Use of a composition for the protection of an article against corrosion, comprising:
(a) application of a layer of the corrosion protecting composition according to any one of claims 1 to 5 or the wrapping tape according to claim 6 or 7; and optionally,
(b) application of a mechanical protective layer on top of the layer of said corrosion protecting composition or the wrapping tape.

9. Process for the manufacturing of a wrapping tape wherein a corrosion protecting composition is laminated onto a film, said film comprising a polymer or a copolymer and said corrosion protecting composition comprising:
(i) an amorphous polymer composition comprising a polyisobutene blend having a glass transition temperature of -40 °C or less as determined by differential scanning calorimetry (DSC);
(ii) one or more antioxidants; and
(iii) one or more filler materials,
wherein the amorphous polymer composition comprises two or more polyisobutenes independently selected from the group consisting of:
a) polyisobutenes having a viscosity average molecular weight Mᵥ of 500 - 5.000;
b) polyisobutenes having a viscosity average molecular weight Mᵥ of 5.000 - 20.000;
c) polyisobutenes having a viscosity average molecular weight Mᵥ of 20.000 - 35.000;
d) polyisobutenes having a viscosity average molecular weight Mᵥ of 35.000 - 45.000;
e) polyisobutenes having a viscosity average molecular weight Mᵥ of 45.000 - 55.000;
f) polyisobutenes having a viscosity average molecular weight Mᵥ of 55.000 - 65.000;
g) polyisobutenes having a viscosity average molecular weight Mᵥ of 65.000 - 75.000;
h) polyisobutenes having a viscosity average molecular weight Mᵥ of 75.000 - 85.000;
i) polyisobutenes having a viscosity average molecular weight Mᵥ of 85.000 - 100.000;
j) polyisobutenes having a viscosity average molecular weight Mᵥ of 100.000 - 500.000;
k) polyisobutenes having a viscosity average molecular weight Mᵥ of 500-000 - 1.000.000; and
l) polyisobutenes having a viscosity average molecular weight Mᵥ of 1.000.000 - 2.500.000;
wherein the corrosion protecting composition comprises at least 40 % by weight of the amorphous polymer composition.

10. Process for covering a shaped article with a wrapping tape according to claim 6 or 7.

11. Process for covering a shaped article with a wrapping tape according to claim 10, wherein the wrapping tape is wrapped around the shaped article such that subsequent layers of the wrapping tape overlap each other.

12. Process of claim 10 or 11, wherein after the wrapping tape has been applied, an outerwrap tape is wrapped around the shaped article.

## Amended claims

### Amended claims in accordance with Rule 137(2) EPC.

1. A composition for the protection against corrosion of an article, wherein the corrosion protecting composition comprises:
(i) an amorphous polymer composition comprising a polyisobutene blend having a glass transition temperature of -40 °C or less as determined by differential scanning calorimetry (DSC);
(ii) one or more antioxidants; and
(iii) one or more filler materials,
wherein the amorphous polymer composition comprises two or more polyisobutenes independently selected from the group consisting of:
a) polyisobutenes having a number average molecular weight Mₙ of 500 - 5.000;
b) polyisobutenes having a viscosity average molecular weight Mᵥ of 5.000 - 20.000;
c) polyisobutenes having a viscosity average molecular weight Mᵥ of 20.000 - 35.000;
d) polyisobutenes having a viscosity average molecular weight Mᵥ of 35.000 - 45.000;
e) polyisobutenes having a viscosity average molecular weight Mᵥ of 45.000 - 55.000;
f) polyisobutenes having a viscosity average molecular weight Mᵥ of 55.000 - 65.000;
g) polyisobutenes having a viscosity average molecular weight Mᵥ of 65.000 - 75.000;
h) polyisobutenes having a viscosity average molecular weight Mᵥ of 75.000 - 85.000; and
i) polyisobutenes having a viscosity average molecular weight Mᵥ of 85.000 - 100.000;
wherein the corrosion protecting composition comprises at least 40 % by weight of the amorphous polymer composition.

2. A composition for the protection against corrosion of an article, wherein the corrosion protecting composition comprises:
(i) an amorphous polymer composition comprising a polyisobutene blend having a glass transition temperature of -40 °C or less as determined by differential scanning calorimetry (DSC);
(ii) one or more antioxidants; and
(iii) one or more filler materials,
wherein the amorphous polymer composition consists of two or more polyisobutenes independently selected from the group consisting of:
a) polyisobutenes having a number average molecular weight Mₙ of 500 - 5.000;
b) polyisobutenes having a viscosity average molecular weight Mᵥ of 5.000 - 20.000;
c) polyisobutenes having a viscosity average molecular weight Mᵥ of 20.000 - 35.000;
d) polyisobutenes having a viscosity average molecular weight Mᵥ of 35.000 - 45.000;
e) polyisobutenes having a viscosity average molecular weight Mᵥ of 45.000 - 55.000;
f) polyisobutenes having a viscosity average molecular weight Mᵥ of 55.000 - 65.000;
g) polyisobutenes having a viscosity average molecular weight Mᵥ of 65.000 - 75.000;
h) polyisobutenes having a viscosity average molecular weight Mᵥ of 75.000 - 85.000; and
i) polyisobutenes having a viscosity average molecular weight Mᵥ of 85.000 - 100.000;
wherein the corrosion protecting composition comprises at least 40 % by weight of the amorphous polymer composition.

3. The composition of claim 1 or 2, wherein the amount of antioxidants and filler materials is less than 60 wt.% based on the total weight of the composition.

4. The composition of claim 1 to 3, wherein the amount of the polyisobutene with the highest viscosity average molecular weight in the corrosion protecting composition is more than 32 wt.%.

5. The composition of any one of claims 1 to 4, wherein the one or more antioxidants are present in an amount of up to 5 wt.% based on the total weight of the corrosion protection composition.

6. The composition of any one of claims 1, 2, 4 or 5, wherein one or more filler materials are present in an amount of 35 to 80 wt.%, based on the total weight of the corrosion protecting composition.

7. Wrapping tape for the protection of an article, comprising (a) a first layer, and (b) a second layer comprising the corrosion protecting composition according to any one of claims 1 to 6.

8. The wrapping tape of claim 7, wherein the first layer is a film comprising a polymer or a copolymer of one or more α-olefins and/or diolefins.

9. Use of a composition for the protection of an article against corrosion, comprising:
(a) application of a layer of the corrosion protecting composition according to any one of claims 1 to 6 or the wrapping tape according to claim 7 or 8; and optionally,
(b) application of a mechanical protective layer on top of the layer of said corrosion protecting composition or the wrapping tape.

10. Process for the manufacturing of a wrapping tape wherein a corrosion protecting composition is laminated onto a film, said film comprising a polymer or a copolymer and said corrosion protecting composition comprising:
(i) an amorphous polymer composition comprising a polyisobutene blend having a glass transition temperature of -40 °C or less as determined by differential scanning calorimetry (DSC);
(ii) one or more antioxidants; and
(iii) one or more filler materials,
wherein the amorphous polymer composition comprises two or more polyisobutenes independently selected from the group consisting of:
a) polyisobutenes having a viscosity average molecular weight Mᵥ of 500 - 5.000;
b) polyisobutenes having a viscosity average molecular weight Mᵥ of 5.000 - 20.000;
c) polyisobutenes having a viscosity average molecular weight Mᵥ of 20.000 - 35.000;
d) polyisobutenes having a viscosity average molecular weight Mᵥ of 35.000 - 45.000;
e) polyisobutenes having a viscosity average molecular weight Mᵥ of 45.000 - 55.000;
f) polyisobutenes having a viscosity average molecular weight Mᵥ of 55.000 - 65.000;
g) polyisobutenes having a viscosity average molecular weight Mᵥ of 65.000 - 75.000;
h) polyisobutenes having a viscosity average molecular weight Mᵥ of 75.000 - 85.000; and
i) polyisobutenes having a viscosity average molecular weight Mᵥ of 85.000 - 100.000;
wherein the corrosion protecting composition comprises at least 40 % by weight of the amorphous polymer composition.

11. Process for covering a shaped article with a wrapping tape according to claim 7 or 8.

12. Process for covering a shaped article with a wrapping tape according to claim 11, wherein the wrapping tape is wrapped around the shaped article such that subsequent layers of the wrapping tape overlap each other.

13. Process of claim 11 or 12, wherein after the wrapping tape has been applied, an outerwrap tape is wrapped around the shaped article.
